# EUROPEAN PATENT APPLICATION

(11) **EP 4 643 631 A1**
(43) Date of publication of application: **05.11.2025**
(21) Application number: 24173785.7
(22) Date of filing: 02.05.2024
(51) Int. Cl.: A01D 41/12, A01D 41/127

(54) **METHOD AND SYSTEM FOR CONTROLLING A CROP TRANSFER PROCESS**

(71) Applicant: CNH Industrial Belgium N.V., 8210 Zedelgem (BE)
(72) Inventor: BECK, Rian, 8210 Zedelgem (BE); NONA, Kenny, 8210 Zedelgem (BE); GEYSEN, Jeroen, 3920 Lommel (BE); KIKKEN, Edward, 3920 Lommel (BE)
(74) Representative: CNH Industrial IP Department

(57) **Abstract**

A method of controlling a crop transfer process for transferring crop (40) between an agricultural harvester (10) and a nearby trailer (30). The method comprises, at different points in time, using an optical sensor (16) of the agricultural harvester (10) to obtain image data relating to the nearby trailer (30). The obtained image data is processed to determine a status parameter of the nearby trailer (30) at those different points in time. Based on the determined status parameter at the different points in time, the status parameter of the nearby trailer (30) at a further and later point in time is estimated. The crop transfer process is then adjusted in dependence of the estimated status parameter.

## Description

### TECHNICAL FIELD

The present invention relates to method and system for controlling a crop transfer process for transferring crop between an agricultural harvester and a nearby trailer. The present invention further relates to a method and system for swapping from transferring crop between an agricultural harvester and a nearby trailer to transferring crop between the agricultural harvester and a second trailer.

### BACKGROUND

Many agricultural harvesters, such as forage harvesters and combine harvesters, are equipped to unload the harvested crop into a nearby trailer while harvesting. This unloading may occur continuously, while the agricultural harvester drives over the field takes the crop from the field and, possibly, cuts, separates, or otherwise processes the harvested crop. For example, in a forage harvester, harvested grass, corn, or other crops are taken from the field, cut into small pieces by a chopper drum, and immediately blown out of a large spout, into the nearby trailer. In other agricultural harvesters, such as a combine harvester, the harvested and, possibly, processed crop is temporarily stored in a crop tank. When this crop tank is full, or when an opportunity arises to empty a half-full crop tank into a nearby trailer, the crop transfer process is started and executed while the agricultural harvester continues harvesting. Other examples of agricultural harvesters that may transfer crop into a trailer while harvesting are sugar cane harvesters, coffee harvesters, grape harvesters, and potato harvesters.

In the crop transfer process it is important that no crop is spilled unnecessarily by not reaching the trailer and falling on the field. Simultaneously controlling the harvesting and the crop transfer process is a very difficult task, even for the most experienced drivers and operators. To assist the driver with the crop transfer process, camera-based automatic and semi-automatic crop transfer control systems have, for example been proposed in the patent publications WO 2011/101458 A1 and EP 3 062 596 A1. While such camera-based control systems have helped to alleviate the operators' tasks, further improvements are still desired to get closer to the ultimate aim of full automation with no loss of crop.

### SUMMARY OF THE INVENTION

According to an aspect of the invention there is provided a new method of controlling a crop transfer process for transferring crop between an agricultural harvester and a nearby trailer. The method comprises, at different points in time, using an optical sensor of the agricultural harvester to obtain image data relating to the nearby trailer. The obtained image data is processed to determine a status parameter of the nearby trailer at those different points in time. Based on the determined status parameter at the different points in time, the status parameter of the nearby trailer at a further and later point in time is estimated. The crop transfer process is then adjusted in dependence of the estimated status parameter.

An important advantage of the crop transfer control system according to the invention is that it is far more robust than the above described purely reactive camera-based crop transfer control systems. In the event of a temporary signal drop-out, status parameter estimates can be used for continuing the crop transfer control with minimal risk of crop spillage. Exemplary causes for such a temporary signal drop-out may include misalignment because of a sudden bump in the field, a passing bird or heavy dust cloud obscuring the view of the optical sensor, or a sudden change in light conditions to which the optical sensor needs to adapt. A further advantage of the crop transfer control system according to the invention is that it can pre-emptively adjust the crop transfer process when needed and thereby avoid crop spillage caused by the control system needing time to initiate and complete the required adjustment. Accordingly, the control system according to the invention allows to prevent possible misalignment between the crop delivering parts of the agricultural harvester and the crop receiving parts of the trailer, before the misalignment actually occurs and becomes visible in the image data.

The step of estimating the status parameter at the further point in time may comprise calculating a change, a rate of change, and/or an acceleration of change of the determined status parameter between the different points in time. Analysis of the change patterns of the status parameters that are observable and derivable from the image data is thus used as a reliable starting point for calculating reliable estimates of the same and other parameters at later points time, thereby allowing the crop transfer control system to proactively adjust the crop transfer process and minimise crop spillage.

Estimates for one or more different status parameters may be determined for one or more future points in time. Each estimated status parameter may, for example, define a position of the trailer relative to the agricultural harvester, an orientation of the trailer relative to the agricultural harvester, a filling level of the trailer, or a crop pile shape of the crop inside the trailer. Accurate predictions of such parameters help the crop transfer control system to direct the crop to a centre of a loading space of the nearby trailer, far away from the edges of the loading space to reduce the risk of the crop falling off at the wrong side of those edges. Furthermore, it may be prevented to continue filling the trailer, or a portion of the trailer, that is already full and cannot take any more crop without risking the additional crop to fall off.

In addition to the status parameters of the nearby trailer, a crop cloud parameter of the transferred crop may be determined at the different points in time. Based on the determined crop cloud parameter at the different points in time, the crop cloud parameter is then estimated at the further point in time, and the crop transfer process is adjusted in dependence of the estimated crop cloud parameter.

The term 'crop cloud' is herein used as a term for the body of crop as it moves through the air after departing from the agricultural harvester and before reaching the nearby trailer. Depending on the circumstances, the crop cloud can, for example, be large or small, compact or loose, well defined with clear, sharp borders or less well defined with blurred borders. Circumstances that may influence such and other crop cloud parameters include, e.g., crop type, wind speed, wind direction, speed and direction of the crop when leaving the agricultural harvester, the amount of crop being transferred per unit of time, and a distance for the crop to travel between leaving the agricultural harvester and reaching the nearby trailer. By taking into account the dynamics of the crop cloud, an even more accurate prediction of where and how the crop will enter the nearby trailer can be made.

The estimating of the crop cloud parameter at the further point in time may include determining a wind speed and direction at either the past different points in time or the future further point in time. The wind speed and direction may, for example, be determined relative to the field, agricultural harvester, or the nearby trailer. Preferably, the wind speed and direction are calculated as relative values indicating or representing the resulting drag on the crop to be transferred.

One or more aspects of the crop transfer process may be adjusted in dependence of the estimated status parameters. For example, a travel speed and/or travel direction of the agricultural harvester may be adjusted. If the crop unloading is done using an unload spout (e.g., in a forage harvester) or via an unload tube (e.g. in a combine harvester), an orientation or configuration of the unload spout or unload tube of the relative to the agricultural harvester may be adjusted. This may, for example, be done by rotating the spout or tube in a horizontal, vertical, or inclined plane, by adjusting a configuration of an end deflector, or by adjusting a height of the spout or tube. Other adjustments to the crop transfer process that may be made include adjusting an ejection power of a crop expel system of the agricultural harvester. For example, the rotational speed of a crop blower in a forage harvester or of an unload auger in the unload tube of a combine harvester may be increased or decreased for releasing the crop at, respectively, higher and lower speeds.

The optical sensor used for the method according to the invention may, for example be a point cloud sensor, RGB camera, a stereo camera, or a radar sensor. In a preferred embodiment, the point cloud sensor is a LiDAR sensor. A LiDAR sensor provides various technical advantages, such as being usable in the dark and working well in dusty conditions.

In a special embodiment, the method further comprises a step of receiving a trailer swap signal, and a step of, based on the determined status parameter and/or the estimated status parameter of the nearby trailer, estimating a position of a second trailer relative to the agricultural harvester. The crop transfer process is then adjusted in dependence of the estimated position of the second trailer relative to the agricultural harvester, in order to cease transferring crop between the agricultural harvester and the nearby trailer and to start transferring crop between the agricultural harvester and the second trailer.

Consequently the image data relating to the nearby trailer is not just used for improved aim of the crop into the nearby trailer, but also for predicting where the second trailer is and for controlling the crop transfer process accordingly. With this prediction of the position of the second trailer, the crop transfer control system can assist with switching from the nearby trailer to the second trailer when it is time to do so. This assistance when swapping between two trailers is especially useful when, from a point of view of the optical sensor, the second trailer is at least partially obscured by the nearby trailer.

According to another aspect of the invention, a further method of controlling a crop transfer process for transferring crop between an agricultural harvester and a nearby trailer is provided. This method comprises a step of using an optical sensor of the agricultural harvester to obtain image data relating to the nearby trailer, a step of processing the obtained image data to determine a position of the nearby trailer relative to the agricultural harvester, a step of receiving a trailer swap signal, a step of based on the determined position of the nearby trailer, estimating a position of a second trailer relative to the agricultural harvester, and a step of adjusting the crop transfer process in dependence of the estimated position of the second trailer relative to the agricultural harvester, in order to cease transferring crop between the agricultural harvester and the nearby trailer and to start transferring crop between the agricultural harvester and the second trailer.

This way, the image data relating to the nearby trailer is used for predicting where the second trailer is and for controlling the crop transfer process accordingly. With this prediction of the position of the second trailer, the crop transfer control system can assist with switching from the nearby trailer to the second trailer when it is time to do so. This assistance when swapping between two trailers is especially useful when, from a point of view of the optical sensor, the second trailer is at least partially obscured by the nearby trailer.

According to yet another aspect of the invention system for controlling a crop transfer process for transferring crop between an agricultural harvester and a nearby trailer. The system comprises an optical sensor for obtaining image data relating to the nearby trailer, and a controller, operatively coupled to the optical sensor and configured to perform a method as claimed in any of the preceding claims.

According to yet another aspect of the invention, an agricultural harvester comprising such a system is provided. The agricultural harvester may, e.g., be a forage harvester or a combine harvester.

### BRIEF DESCRIPTION OF THE DRAWINGS

Embodiments of the invention will now be described by way of example with reference to the accompanying drawings, in which:
Figure 1 shows a forage harvester unloading crop into a nearby trailer.
Figure 2 shows a top view of a forage harvester and two trailers for receiving crop from the forage harvester.

### DETAILED DESCRIPTION

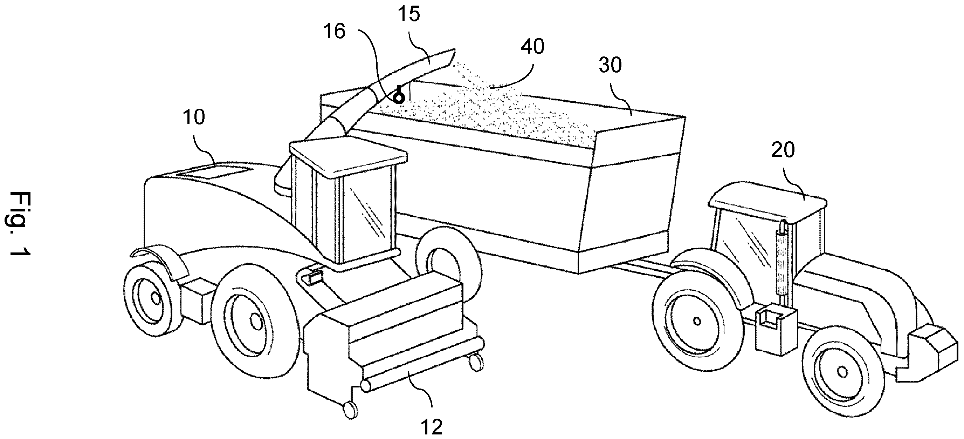

Figure 1 shows a forage harvester 10 unloading crop 40 into a nearby trailer 30. The forage harvester 10 is equipped with a grass pickup 12 for picking up swaths of grass from the field. In the forage harvester 10, the grass is chopped into small pieces and then accelerated by a blower that blows the cut grass 40 out of the spout 15 into the loading space of the trailer 30 that is pulled along the moving forage harvester 10 by a tractor 20.

In this crop transfer process it important that no crop 40 is spilled unnecessarily by not reaching the trailer 30 and falling on the field. To aim the flow of crop 40 between the two vehicles 10, 30, the driving speed and direction of the tractor 20 and the forage harvester 10 need to be coordinated. Additionally, the driver of the forage harvester 10 has the possibility to control the crop release, for example by changing a height or orientation of the spout 15, the configuration of an end deflector (not shown) at the distal end of the spout 15, and the power with which the blower blows the cut grass 40 through, and out of, the spout 15.

Simultaneously controlling the route of the forage harvester 10, the harvesting process, and the crop transfer process is a very difficult task, even for the most experienced drivers and operators. To assist the driver with the crop transfer process, camera-based automatic and semi-automatic crop transfer control systems have been proposed before. Such camera-based control systems may, for example, use a camera 16 that is mounted under the spout 15 to monitor the crop flow between the harvester 10 and the trailer 30. It The control system may comprise additional cameras and/or a camera that is mounted to other parts of the forage harvester 10, such as a roof of the drive cabin. In the embodiments described herein, the camera 16 may, for example, be a point cloud sensor, an RGB camera, a stereo camera, or a radar sensor. In preferred embodiments, the point cloud sensor is a LiDAR sensor. A LiDAR sensor provides various technical advantages, such as being usable in the dark and working well in dusty conditions

The current invention relates to an improved method of controlling the crop transfer process. The camera 16, or a similar optical sensor, is used for obtaining image data relating to the nearby trailer 30 at different points in time. The obtained image data is processed to determine one or more status parameters of the nearby trailer 30 at those different points in time. The status parameters may, for example, define a position of the trailer 30 relative to the harvester 10, an orientation of the trailer 30 relative to the harvester 10, a filling level of the trailer 30, or a crop pile shape of the crop 40 inside the trailer 30.

In addition to status parameters of the nearby trailer 30, a crop cloud parameter of the transferred crop 40 may be determined at the different points in time. The term 'crop cloud' is herein used as a term for the body of crop 40 as it moves through the air after departing from the harvester 10 and before reaching the nearby trailer 30. Depending on the circumstances, the crop cloud 40 can, for example, be large or small, compact or loose, well defined with clear, sharp borders or less well defined with blurred borders. Circumstances that may influence such and other crop cloud parameters include, e.g., crop type, wind speed, wind direction, speed and direction of the crop 40 when leaving the harvester 10, the amount of crop being transferred per unit of time, and a distance for the crop to travel between leaving the harvester 10 and reaching the nearby trailer 30. By taking into account the dynamics of the crop cloud 40, an even more accurate prediction of where and how the crop 40 will enter the nearby trailer 30 can be made.

Preferably, the image data includes images of the trailer 30 itself, but it's also possible to derive the trailer position from images that only include images of the tractor 20 that is pulling the trailer 30. Standard image recognition and edge detection algorithms may be used to determine the status parameters of the nearby trailer 30, as well as the crop cloud parameters of the transferred crop 40. Machine learning and neural networks may be employed to analyse the image data. The machine learning algorithms may be trained using large amounts of similar camera images of many different trailers 30, preferably taken by the same or an identical camera 16 during earlier harvesting sessions. The training data may include images taken while transferring crop 40 into the trailer 30, and images taken while no crop 40 is being transferred. Alternatively or additionally, synthetic training data may be used for training the machine learning algorithms. The accuracy of the image analysis may be further improved by taking into account trailer-specific information, such as the size and shape of the trailer 30, or the length and design of the coupling mechanism connecting the trailer 30 to the tractor 20. The training images may be classified and analysed by experienced users who are capable of identifying relevant features and who can assign values to one or more relevant status parameters. One advantage of the use of advanced image recognition techniques, such as those applying machine learning algorithms and neural networks, is that the trailer can be reliably recognised, even when it hasn't been fitted with special markers or indicators.

Based on the one or more determined status parameters at the different points in time, status parameters of the nearby 30 trailer at a further and later point in time are estimated. The crop transfer process is then adjusted in dependence of the estimated status parameters. The step of estimating status parameters at the further point in time may comprise calculating a change, a rate of change, and/or an acceleration of change of the determined status parameter between the different points in time. Analysis of the change patterns of the status parameters that are observable and derivable from the image data is thus used as a reliable starting point for calculating reliable estimates of the same and other parameters at later points time, thereby allowing the crop transfer control system to proactively adjust the crop transfer process and minimise crop spillage. Future trailer status parameters can be accurately predicted by analysing how these parameters have recently developed over time and by accurately extrapolating the just acquired data into the near future.

The estimates for one or more different status parameters may be determined for one or more future points in time. Each estimated status parameter may, for example, define a position of the trailer 30 relative to the harvester 10, an orientation of the trailer 30 relative to the harvester 10, a filling level of the trailer 30, or a crop pile shape of the crop 40 inside the trailer 30. Accurate predictions of such parameters help the crop transfer control system to direct the crop to a centre of a loading space of the trailer 30, far away from the edges of the loading space to reduce the risk of the crop falling off at the wrong side of those edges. Furthermore, it may be prevented to continue filling the trailer 30, or a portion of the trailer 30, that is already full and cannot take any more crop 40 without risking the additional crop 40 to fall off.

In addition to status parameters of the nearby trailer 30, a crop cloud parameter of the transferred crop 40 may be determined at the different points in time. Based on the determined crop cloud parameter at the different points in time, the crop cloud parameter is then estimated at the further point in time, and the crop transfer process is adjusted in dependence of the estimated crop cloud parameter. The estimating of the crop cloud parameter at the further point in time may include determining a wind speed and direction at either the past different points in time or the future further point in time. The wind speed and direction may, for example, be determined relative to the field, the harvester 10, or the nearby trailer 30. Preferably, the wind speed and direction are calculated as relative values indicating or representing the resulting drag on the crop 40 to be transferred.

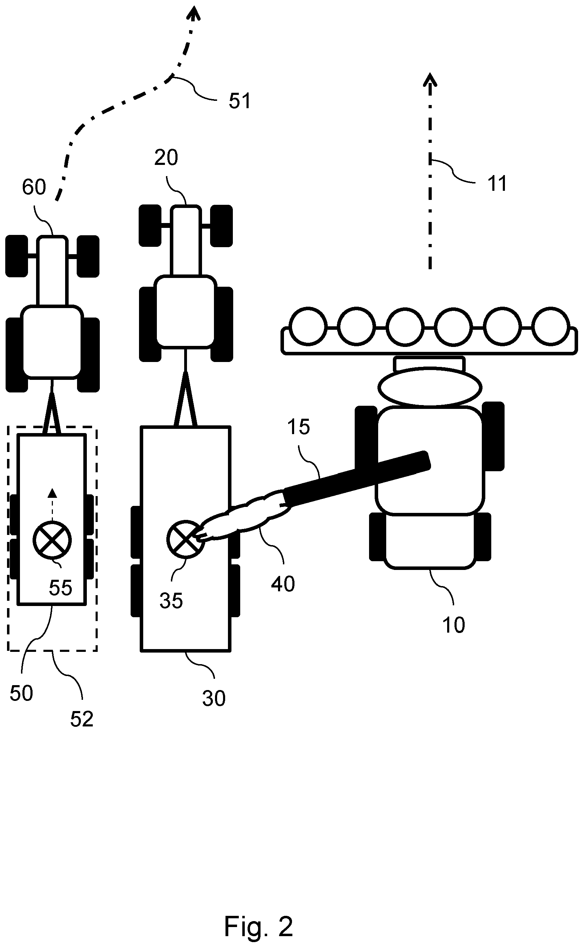

One or more aspects of the crop transfer process may be adjusted in dependence of the estimated status parameters. For example, a travel speed and/or travel direction of the harvester 10 may be adjusted. If the crop unloading is done using an unload spout 15 (e.g., in a forage harvester 10 as shown in Figures 1 and 2) or via an unload tube (e.g. in a combine harvester), an orientation or configuration of the unload spout 15 or unload tube of the relative to the agricultural harvester may be adjusted. This may, for example, be done by rotating the spout 15 in a horizontal, vertical, or inclined plane, by adjusting a configuration of an end deflector, or by adjusting a height of the spout 15. Other adjustments to the crop transfer process that may be made include adjusting an ejection power of a crop expel system of the harvester 10. For example, the rotational speed of a crop blower in the forage harvester 10 may be increased or decreased for releasing the crop 40 at, respectively, higher and lower speeds.

The crop transfer control system described herein is more robust than a purely reactive camera-based crop transfer control systems. In the event of a temporary signal drop-out, status parameter estimates can be used for continuing the crop transfer control with minimal risk of crop spillage. Exemplary causes for such a temporary signal drop-out may include misalignment of the harvester 10 and the trailer 30 because of a sudden bump in the field, a passing bird or heavy dust cloud obscuring the view of the camera 16, or a sudden change in light conditions to which the camera 16 needs to adapt. A further advantage is that the crop transfer control system can pre-emptively adjust the crop transfer process when needed and thereby avoid crop spillage caused by the control system needing time to initiate and complete the required adjustment. Accordingly, possible misalignment between the crop delivering parts of the harvester 10 and the crop receiving parts of the trailer 30 can be prevented, before the misalignment actually occurs and becomes visible in the image data.

Figure 2 shows a top view of a forage harvester 10 and two trailers 30, 50 for receiving crop 40 from the forage harvester 10. The crop transfer control system controls the harvester 10 and/or the spout 15 to direct the crop 40 into the loading space of the trailer 30, preferably at or close to a virtual target 35 in the centre of the trailer 30 to minimise the risk of crop spillage when unexpected misalignment occurs. When one or more of the determined status parameters of the nearby trailer 30 relate to a shape of the crop pile inside the loading space, the virtual target 35 may be moved relative to the filling opening of the trailer in order to ensure that the loading space is filled evenly and the trailer 30 can carry a maximum amount of crop 40 without risking any crop spillage.

When the trailer 30 is filled up to its maximum filling level, the tractor 20 with this full, or almost full, trailer 30 may leave the field and return to the farm, while the harvester 10 continues harvesting. In the situation shown in Figure 2, a second trailer 50, pulled by a second tractor 60 is already lined up in the vicinity of the harvester 10 to receive the harvested crop 40, when the first trailer 30 is moved away. Unfortunately, the second trailer 50 and the tractor 60 pulling it are not, or only partly, visible from the viewpoint of the camera 16 of the crop transfer control system. Especially in this case, wherein the second trailer 50 is smaller than the nearby trailer 30, the camera's view on the former is at least partly obscured by the latter.

In a special embodiment of the crop transfer control method disclosed herein, the method further comprises a step of receiving a trailer swap signal, and a step of, based on the determined status parameter and/or the estimated status parameter of the nearby trailer 30, estimating a position of a second trailer 50 relative to the harvester 10. The crop transfer process is then adjusted in dependence of the estimated position of the second trailer 50 relative to the harvester 10, in order to cease transferring crop 40 between the harvester 10 and the nearby trailer 30 and to start transferring crop 40 between the harvester 10 and the second trailer 50. In this case, exemplary adjustments that may be made are raising the spout 15, pivoting an end deflector on the distal end of the spout 15 upwards, or increasing the rotational speed of the crop blower inside the harvester 10 to increase the distance over which the crop 40 is thrown, such that it falls inside the second trailer 50 instead of in the first, nearby trailer 30. With such fully or partly automated trailer swapping algorithms, the image data obtained by the camera 16 and relating to the nearby trailer 30 is not just used for improved aim of the crop into the nearby trailer 30, but also for predicting where the second trailer 50 is and for controlling the crop transfer process accordingly.

The swap signal that triggers the trailer swap may, for example, be triggered by the driver of the harvester 10 when he realises that the first trailer 30 is filled to its maximum capacity, or when he is made aware of the second tractor 60 and trailer 50 being present. Alternatively, the triggering of the swap signal is caused by the crop transfer process system itself, based on the status parameters of the nearby trailer 30 and/or on additional input received from other sensors or communication systems.

An estimated position of the second trailer 50 relative to the harvester 10 can be determined based on just the determined status parameters of the first, nearby trailer 30. This allows estimating the position of the second trailer 50, even in the event that, from the point of view of the camera 16, the second trailer 50 is fully obscured by the first, nearby trailer 30. The algorithm for estimating the position of the second trailer 50 may assume an outline 52 of the filling region of the invisible second trailer 50 to be identical to the that of the first, nearby trailer 30. If the crop transfer control system has any prior knowledge of the size and shape of the second trailer 50, this may be taken into account when calculating an estimated virtual target 55 for the second trailer 50. In this example, the estimated visual target 55 may be positioned a bit more forward (relative to the driving direction 11) to avoid crop falling behind the second trailer 50. A similar adjustment to the estimated virtual target 55 may be made when the crop transfer control system does not have such prior knowledge, just to be sure that the trailer swap does not lead to unnecessary crop spillage when the second trailer 50 is smaller than the first one. For estimating the position of the second trailer 50, the crop transfer control system may assume a prescribed spatial relationship between the two trailers 30, 50. If at least a portion of the second tractors 60 and/or of the second trailer 50 are in the field of view of the camera, such assumptions can be replaced or adapted using the information derivable from the image data. Similarly, if the second trailer 50 has been, wholly or partly, in the field of view of the camera 16 before, its previously observed location or trajectory may be used to further improve the accuracy of the prediction of the second trailer's current position.

When the trailer swap is completed, the tractor 20 pulling the first, nearby trailer 30 will typically slow down to get away from the second tractor 60 and the harvester 10 and to not interfere with the continuing harvesting operation. The trailer swap algorithm may therefore already expect the driver of the second tractor 60 to not just drive straight on, but to follow an S-curve 51 and take a position closer to the harvester 10. Taking into account this expected change of course will allow the crop transfer control system to, for example, start adjusting the orientation of the spout as soon as it sees the first tractor 20 withdrawing and before the driver of the second tractor 60 steers the tractor 60 closer to the harvester 10.

It is to be noted that the trailer swap algorithm doesn't necessarily need image data obtained at different points in time. Although more data, obtained at different points in time may help to increase the accuracy and the reliability of the trailer swapping algorithms, a single image of the nearby trailer 30 can be enough to predict where the second trailer 20 can be found and how the crop transfer process needs to be adapted for an efficient trailer swap. Further variations and adaptations of the exemplary embodiments of the invention provided above are possible and may fall within the scope of the appended claims.

## Claims

1. A method of controlling a crop transfer process for transferring crop (40) between an agricultural harvester (10) and a nearby trailer (30), the method comprising:
at different points in time, using an optical sensor (16) of the agricultural harvester (10) to obtain image data relating to the nearby trailer (30),
processing the obtained image data to determine a status parameter of the nearby trailer (30) at the different points in time,
based on the determined status parameter at the different points in time, estimating the status parameter of the nearby trailer (30) at a further point in time, the further point in time being later than the different points in time, and
adjusting the crop transfer process in dependence of the estimated status parameter.

2. A method of controlling a crop transfer process as claimed in claim 1, wherein the estimating the status parameter at the further point in time comprises calculating a change, a rate of change, and/or an acceleration of change of the determined status parameter between the different points in time.

3. A method of controlling a crop transfer process as claimed in claim 1 or 2, wherein the status parameter defines one of:
a position of the nearby trailer (30) relative to the agricultural harvester (10),
an orientation of the nearby trailer (30) relative to the agricultural harvester (10),
a filling level of the nearby trailer (30), and
a crop pile shape of the crop (40) inside the nearby trailer (30).

4. A method of controlling a crop transfer process as claimed in any preceding claim, further comprising:
processing the obtained image data to determine a crop cloud parameter of the transferred crop (40) at the different points in time,
based on the determined crop cloud parameter at the different points in time, estimating the crop cloud parameter at the further point in time, and
adjusting the crop transfer process in dependence of the estimated crop cloud parameter.

5. A method of controlling a crop transfer process as claimed in claim 4, wherein estimating the crop cloud parameter at the further point in time comprises determining a wind speed and direction.

6. A method of controlling a crop transfer process as claimed in any preceding claim, wherein the adjusting the crop transfer processes comprises one of:
adapting a travel speed and/or travel direction of the agricultural harvester (10),
adjusting an orientation of an unload spout (15) or unload tube of the agricultural harvester (10) relative to the agricultural harvester (10),
adjusting an ejection power of a crop (40) expel system of the agricultural harvester (10), and
adjusting a configuration of the unload spout (15) or unload tube of the agricultural harvester (10).

7. A method of controlling a crop transfer process as claimed in any preceding claim, wherein the optical sensor (16) is a point cloud sensor.

8. A method of controlling a crop transfer process as claimed in claim 7, wherein the point cloud sensor is a LiDAR sensor.

9. A method of controlling a crop transfer process as claimed in any preceding claim, further comprising:
receiving a trailer swap signal,
based on the determined status parameter and/or the estimated status parameter of the nearby trailer (30), estimating a position of a second trailer (50) relative to the agricultural harvester (10),
adjusting the crop transfer process in dependence of the estimated position of the second trailer (50) relative to the agricultural harvester (10), in order to cease transferring crop (40) between the agricultural harvester (10) and the nearby trailer (30) and to start transferring crop (40) between the agricultural harvester (10) and the second trailer (50).

10. A method of controlling a crop transfer process as claimed in claim 9, wherein, at the different points in time and from a point of view of the optical sensor (16), the second trailer (50) is at least partially obscured by the nearby trailer (30).

11. A method of controlling a crop transfer process for transferring crop (40) between an agricultural harvester (10) and a nearby trailer (30), the method comprising:
using an optical sensor (16) of the agricultural harvester (10) to obtain image data relating to the nearby trailer (30),
processing the obtained image data to determine a position of the nearby trailer (30) relative to the agricultural harvester (10),
receiving a trailer swap signal,
based on the determined position of the nearby trailer (30), estimating a position of a second trailer (50) relative to the agricultural harvester (10),
adjusting the crop transfer process in dependence of the estimated position of the second trailer (50) relative to the agricultural harvester (10), in order to cease transferring crop (40) between the agricultural harvester (10) and the nearby trailer (30) and to start transferring crop (40) between the agricultural harvester (10) and the second trailer (50).

12. A system for controlling a crop transfer process for transferring crop (40) between an agricultural harvester (10) and a nearby trailer (30), the system comprising:
an optical sensor (16) for obtaining image data relating to the nearby trailer (30), and
a controller, operatively coupled to the optical sensor (16) and configured to perform a method as claimed in any of the preceding claims.

13. An agricultural harvester (10) comprising a system as claimed in claim 12.

14. An agricultural harvester (10) as claimed in claim 13, wherein the agricultural harvester (10) is a forage harvester (10) or a combine harvester.

15. A non-transitory, computer-readable storage medium storing instructions thereon that when executed by one or more processors cause the one or more processors to execute the method of any of claims 1 to 11.
